# NEUE EUROPÄISCHE PATENTSCHRIFT

(11) **EP 2 051 891 B2**
(45) Veröffentlichungstag und Bekanntmachung des Hinweises auf die Entscheidung über den Einspruch: **17.08.2016**
(45) Hinweis auf die Patenterteilung: 19.05.2010
(21) Anmeldenummer: 07801563.3
(22) Anmeldetag: 08.08.2007
(51) Int. Cl.: B60T 17/00

(54) **DRUCKLUFTVERSORGUNGSEINRICHTUNG**
COMPRESSED AIR SUPPLY DEVICE
DISPOSITIF D'ALIMENTATION EN AIR COMPRIMÉ

(30) Priorität: 08.08.2006 DE 102006037311
(43) Veröffentlichungstag der Anmeldung: 29.04.2009
(73) Patentinhaber: KNORR-BREMSE Systeme für Nutzfahrzeuge GmbH, 80809 München (DE)
(72) Erfinder: HILBERER, Eduard, 68766 Hockenheim (DE)
(74) Vertreter: Schumacher & Willsau
(86) Internationale Anmeldenummer: PCT/EP2007/007025
(87) Internationale Veröffentlichungsnummer: WO 2008/017474

(56) Entgegenhaltungen:
- EP-A- 0 234 229
- EP-A- 0 608 606
- WO-A-2005/051521
- US-A- 4 946 485
- US-A- 5 595 588
- US-A1- 2004 094 036

## Beschreibung

Die Erfindung betrifft eine Druckluftversorgungseinrichtung für ein Nutzfahrzeug, mit einem Ventilgehäuse und einer lösbar mit dem Ventilgehäuse verbundenen Lufttrocknerpatrone.

Derartige Druckluftversorgungseinrichtungen beliefern Druckluftverbraucher in Nutzfahrzeugen mit aufbereiteter Druckluft. Typische Druckluftverbraucher sind beispielsweise ein pneumatisches Bremssystem oder eine Luftfederung. Eine Druckluftversorgungseinrichtung vereinigt zahlreiche Funktionen. Eine wichtige Aufgabe besteht in der Trocknung und Reinigung der Luft. Zu diesem Zweck ist eine Lufttrocknerpatrone vorgesehen, die Filtereinrichtungen und ein Trockenmittel enthält. Andere wichtige Aufgaben bestehen in der Druckregelung der von einem Kompressor gelieferten Druckluft sowie in der sicheren Verteilung der Druckluft auf die verschiedenen Verbraucherkreise. Diese Aufgaben werden durch Ventileinrichtungen, die in einem Ventilgehäuse untergebracht sind, übernommen, nämlich einem Druckregler und einem Mehrkreisschutzventil. Moderne Druckluftversorgungseinrichtungen enthalten zusätzlich zu den pneumatischen Komponenten eine elektronische Steuerung sowie elektrisch ansteuerbare Komponenten, beispielsweise Magnetventile, und eine mit der elektronischen Steuerung in Verbindung stehende Sensorik. Die so ausgestatteten Druckluftversorgungseinrichtungen werden auch als EAC (Electronic Air Control) bezeichnet.

Da die Aufnahmefähigkeit der Lufttrocknerpatrone an Fremdstoffen und Feuchtigkeit begrenzt ist, muss diese in regelmäßigen zeitlichen Abständen beziehungsweise in Abhängigkeit der Förderleistung des Kompressors regeneriert und schließlich ausgetauscht werden. Der Wartungsvorgang des Austausches sollte nützlicherweise vom Fahrer des Nutzfahrzeugs selbst vorgenommen werden können, das heißt ohne die Hilfe einer Werkstatt. Folglich sind die Lufttrocknerpatronen gutzugänglich am Ventilgehäuse über ein mehrgängiges Gewinde angebracht. Muss der Fahrer des Nutzfahrzeuges die Lufttrocknerpatrone wechseln, so ist hierfür lediglich ein Abschrauben der Patrone erforderlich, wobei während des Abschraubvorgangs der im Druckluftsystem vorhandene Restdruckin unproblematischer Weise entweichen kann. Die neue Lufttrocknerpatrone kann dann über das Gewinde mit dem Ventilgehäuse verbunden werden.

An der Verbindungsart mittels eines Gewindes ist mitunter problematisch, dass der Fahrer des Nutzfahrzeuges ein Gefühl dafür haben muss, wie fest die Lufttrocknerpatrone auf das Ventilgehäuse aufzuschrauben ist. Dabei kann ihm ein an Bord mitzuführendes Werkzeug helfen, welches die in jedem Fall korrekte Montage sicherstellt, wobei die Mitführung des Werkzeugs dann aber einen zusätzlichen Aufwand darstellt. Weiterhin wird für die Gewindeverbindung eine gewisse zusätzliche Montagehöhe benötigt, was dem allgemeinen Bestreben der Bauraumverringerung von Fahrzeugkomponenten entgegensteht

Das Dokument EP 0 234229 A2 beschreibt einen mit Bajonett verschluss öffnungsbaren Trochenmittel box.

Die US 4,946,485 beschreibt eine Lufttrocknerpatrone, die an einer Basisplatte angeschraubt wird. Der Deckel der Lufttrocknerpatrone wird mit einem Bajonettring ander Basisplatte befestigt.

Der Erfindung liegt die Aufgabe zugrunde, eine Druckluftversorgungseinrichtung zur Verfügung zu stellen, die bei geringer Montagehöhe eine fehlerfreie und sichere Montage der Lufttrocknerpatrone zulässt, wobei insbesondere keine Werkzeuge erforderlich sein sollen.

Diese Aufgabe wird mit den Merkmalen der unabhängigen Ansprüche gelost.

Vorteilhafte Ausführungsformen der Erfindung sind in den abhängigen Ansprüchen angegeben.

Die Erfindung baut auf der gattungsgemäßen Druckluftversorgungseinrichtung dadurch auf, dass das Ventilgehäuse und die Lufttrocknerpatrone über einen Bajonettverschluss miteinander verbunden sind. Ein Bajonettverschluss bietet den Vorzug einer gegenüber einer Gewindeverbindung reduzierten Montagehöhe, und die Montage der Lufttrocknerpatrone ist gegenüber der herkömmliche Montage über ein Gewinde vereinfacht.

Erfindungsgemäß ist vorgesehen, dass die Lufttrocknerpatrone und das Ventilgehäuse zumindest abschnittsweise jeweils einen sich im Wesentlichen radial nach außen erstreckenden Kragen aufweisen, wobei durch mindestens einen dieser Krägen Abschnitte gebildet sind, die eine in Schließrichtung des Bajonettverschlusses zunehmende axiale Kragendicke aufweisen, und dass ein über die Krägen geführter, von der Lufttrocknerpatrone und dem Ventilgehäuse lösbarer Außenbajonettring vorgesehen ist, der einen sich in radiale Richtung nach innen erstreckenden Kragen und in axiale Richtung dazu versetzte nach innen gerichtete Vorsprünge aufweist, wobei die axiale Breite der Vorsprünge der variablen axialen Krägendicke in der Weise angepasst ist, dass der Bajonettverschluss durch relative Drehung von Außenbajonettring und Ventilgehäuse beziehungsweise Lufttrocknerpatrone schließbar beziehungsweise lösbar ist. Ein Außenbajonettring als Verbindungselement bietet sich an, wenn das Ventilgehäuse und die Lufttrocknerpatrone im Wesentlichen die gleichen radialen Abmessungen haben sollen.

Nützlicherweise ist vorgesehen, dass der Kragen des Ventilgehäuses mehrere sich in Umfangsrichtung erstreckende Kragenabschnitte mit in Schließrichtung des Bajonettverschlusses zunehmender axialer Kragendicke und mit dazwischen vorgesehenen Ausnehmungen aufweist und dass sich der Kragen der Lufttrocknerpatrone über den gesamte Umfang im Wesentlichen gleichförmig erstreckt und bei geschlossenem Bajonettverschluss über eine Dichtung mit dem Ventilgehäuse zusammenwirkt. Die vergleichsweise dünnwandige Lufttrocknerpatrone muss somit keine besondere Ausgestaltung im Bereich ihres Kragens erfahren, während die zur Realisierung des Bajonettverschlusses erforderlichen Abschrägungen im Bereich des Ventilgehäuses realisiert werden.

Es ist bevorzugt, dass die Kragenabschnitte zumindest teilweise einen Anschlag zur Begrenzung der Schließdrehung des Bajonettverschlusses aufweisen. Durch den Anschlag bestehen für den Fahrer beim Aufsetzen einer neuen Lufttrocknerpatrone keine Zweifel mehr, dass die Montage ordnungsgemäß erfolgt ist.

Weiterhin kann nützlicherweise vorgesehen sein, dass der Außenbajonettring gegen die Lufttrocknerpatrone verdrehgesichert ist. Eine Drehung der Lufttrocknerpatrone im abgedichteten Zustand über die Dichtfläche wird somit unterbunden.

Gemäß einer weiteren erfindungsgmäß Ausführungsform der vorliegenden Erfindung ist vorgesehen, dass die Lufttrocknerpatrone einen sich im Wesentlichen radial nach außen erstreckenden Kragen aufweist, der durch einen die Lufttrocknerpatrone umgebenden Innenbajonettring im geschlossenen Zustand des Bajonettverschlusses in axiale Richtung mit Kraft beaufschlagbar ist, dass der Innenbajonettring einen sich in radiale Richtung nach außen erstreckenden Kragen und in axiale Richtung dazu versetzte nach außen gerichtete Vorsprünge aufweist, die in Schließrichtung des Bajonettverschlusses zunehmende axiale Vorsprungdicke aufweisen, und dass ein zumindest teilweise radial außerhalb des Innenbajonettrings liegender Teil des Ventilgehäuses sich radial nach außen erstreckende Ausnehmungen aufweist, deren axiale Dicken in der Weise den Vorsprüngen des Ventilgehäuses angepasst sind, dass der Bajonettverschluss durch relative Drehung von Innenbajonettring und Ventilgehäuse schließbar beziehungsweise lösbar ist. Die Verwendung eines Innenbajonettringes bietet sich an, wenn das Ventilgehäuse einen größeren Radius als die Lufttrocknerpatrone aufweist. Der Innenbajonettring fügt sich dann ohne die Beanspruchung weiteren Bauraumes in das Ventilgehäuse ein.

Wie auch schon im Falle des Außenbajonettringes ist vorgesehen, dass die Vorsprünge des Innenbajonettrings zumindest teilweise einen Anschlag zur Begrenzung der Schließdrehung des Bajonettverschlusses aufweisen.

Ebenfalls kann vorgesehen sein, dass der Innenbajonettring gegen die Lufttrocknerpatrone verdrehgesichert ist.

Gemäß der weiteren erfindungsgemäßen Ausführungsforrm der Erfindung ist vorgesehen, dass der Innenbajonettring von der Lufttrocknerpatrone lösbar ist. Dies entspricht dem ebenfalls im Zusammenhang mit dem Außenbajonett verwirklichten Prinzip, bei dem der Bajonettring als zusätzliches Bauteil die Verbindung von Lufttrocknerpatrone und Ventilgehäuse bewirkt.

Dabei kann nützlicherweise vorgesehen sein, dass die Lufttrocknerpatrone bei geschlossenem Bajonettverschluss über eine Dichtung mit dem Ventilgehäuse zusammenwirkt. Bei einer direkten abdichtenden Verbindung von Lufttrocknerpatrone und Ventilgehäuse spricht man von einer offenen Auslegung der Lufttrocknerpatrone, die im Hinblick auf die Einsparung von Bauhöhe besonders nützlich ist.

Gemäß einem nicht beanspruchten Beispiel kann aber auch vorgesehen sein, dass der Innenbajonettring fest mit der Lufttrocknerpatrone verbunden ist und zumindest einen Teil eines Fußflansches der Lufttrocknerpatrone bildet. Ein derartiges geschlossenes System ist insbesondere im Hinblick auf die Montage vorteilhaft, da nur zwei Bauteile beteiligt sind.

Gemäß einer weiteren besonders bevorzugten Ausführungsform der erfindungsgemäßen Druckluftversorgungseinrichtung ist vorgesehen, dass der Bajonettverschluss einen Bajonettring aufweist, der eine ein Sicherungselement aufnehmende Öffnung hat, wobei das Sicherungselement im geschlossenen Zustand des Bajonettverschlusses in eine Öffnung des Ventilgehäuses einrastet, über die die Drucklufiversorgungseinrichtung durch Betätigen des Sicherungselementes entlüftet werden kann. Zusätzlich zu den vorzugsweise vorhandenen Anschlägen im Bajonettverschluss, die die Drehung des Bajonettverschlusses begrenzen, kann ein einrastendes Sicherungselement zusätzliche Sicherheit bieten. Das Einrasten kann akustisch vom Fahrer wahrgenommen werden. Zusätzlich bietet das Sicherungselement die Möglichkeit, die Druckluftversorgungseinrichtung vor dem Öffnen des Bajonettverschlusses zu entlüften. Dies ist bei einer Verbindung über einen Bajonettverschluss nützlich, da ansonsten nach einer geringen Öffnungsbewegung des Bajonettverschlusses eine schlagartige Entlüftung erfolgen könnte, die mitunter zu gefährlichen Situationen führen könnte. Da das Sicherungselement im geschlossenen Zustand des Bajonettverschlusses einrastet und so die Öffnungsbewegung verhindert, wird sichergestellt, dass stets vor dem Öffnen durch Betätigen des Sicherungselementes eine Entlüftung stattfinden muss.

Dies ist konstruktiv so realisiert, dass das Sicherungselement eine Nase aufweist, die durch die Kraft einer Feder in die Öffnung des Ventilgehäuses gedrückt wird, wobei die Nase zum Entlüften der Druckluftversorgungseinrichtung und zur Freigabe der Öffnungsbewegung des Bajonettverschlusses gegen die Federkraft bewegbar ist.

Weiterhin kann vorgesehen sein, dass das Ventilgehäuse einen in Richtung der Lufttrocknerpatrone vorstehenden exzentrischen Zapfen aufweist, der in eine Öffnung einer in einem Gehäuse der Lufttrocknerpatrone angeordneten Trockenmittelbox eindringt, wobei die Länge des Zapfens so bemessen ist, dass über ihn der erste Kontakt zwischen Lufttrocknerpatrone und Ventilgehäuse beim Zusammenbau erfolgt. Die hierdurch zur Verfügung gestellte Zentrierhilfe und Verdrehsicherung werden durch die Verbindung von Ventilgehäuse und Lufttrocknerpatrone mittels Bajonettverschluss erst ermöglicht, da bei einerVerbindung mit mehrgängigem Gewinde eine Verdrehung von Lufttrocknerpatrone und Ventilgehäuse relativ zueinander erforderlich ist.

Die Erfindung wird nun mit Bezug auf die begleitenden Zeichnungen anhand besonders bevorzugter Ausführungsformen beispielhaft erläutert.

Es zeigen:
- Figur 1: eine erste Ausführungsform einer erfindungsgemä- ßen Druckluftversorgungseinrichtung in geschnit- tener Darstellung;
- Figur 2: eine erste Ausführungsform einer erfindungsgemä- ßen Druckluftversorgungseinrichtung in geschnit- tener Explosionsdarstellung;
- Figur 3: eine Schnittansicht eines Teils einer erfindungs- gemäßen Druckluftversorgungseinrichtung mit einem Sicherungselement;
- Figur 4: eine perspektivische Darstellung eines Außenbajo- nettrings;
- Figur 5: eine Draufsicht eines Außenbajonettrings;
- Figur 6: eine zweite Ausführungsform einer erfindungsgemä- ßen Druckluftversorgungseinrichtung in geschnit- tener Darstellung;
- Figur 7: eine perspektivische Darstellung eines Innenbajo- nettrings;
- Figur 8: eine Draufsicht eines Innenbajonettrings;
- Figur 9: eine dritte Ausführungsform einer erfindungsgemä- ßen Druckluftversorgungseinrichtung in geschnit- tener Darstellung;
- Figur 10: eine perspektivische Darstellung einer Lufttrocknerpatrone mit Fußflansch und Innenbajonett- ring;
- Figur 11: eine perspektivische Darstellung eines Innenbajo- nettrings mit Fußflanschfunktion;
- Figur 12: eine Schnittansicht eines Teils einer erfindungs- gemäßen Druckluftversorgungseinrichtung zur Er- läuterung einer ersten Montageart eines Fußflan- sches;
- Figur 13: eine Schnittansicht eines Teils einer erfindungs- gemäßen Druckluftversorgungseinrichtung zur Er- läuterung einerzweiten Montageart eines Fußflan- sches;
- Figur 14: einen Teil einer erfindungsgemäßen Druckluftver- sorgungseinrichtung in geschnittener Darstellung;
- Figur 15: einen Teil einer Trockenmittelbox in perspektivi- scher Darstellung;
- Figur 16: eine perspektivische geschnittene Darstellung ei- nes Teils einer erfindungsgemäßen Lufttrocknerpatrone und
- Figur 17: eine Trockenmittelbox in perspektivischer Darstellung.

Bei der nachfolgenden Beschreibung der Zeichnungen bezeichnen gleiche Bezugszeichen gleiche oder vergleichbare Komponenten.

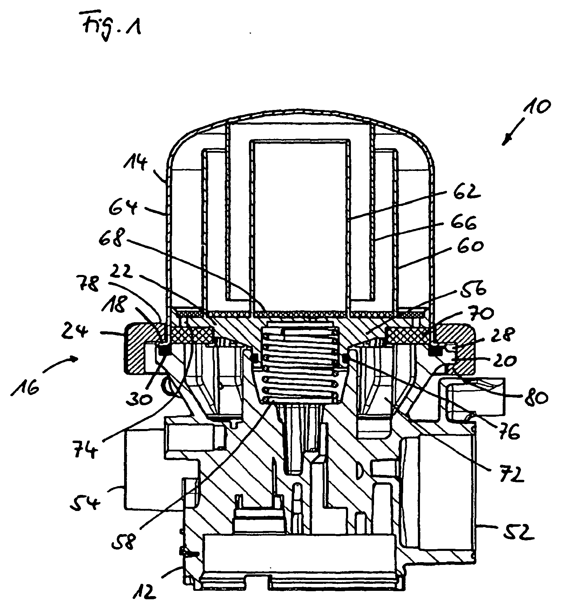

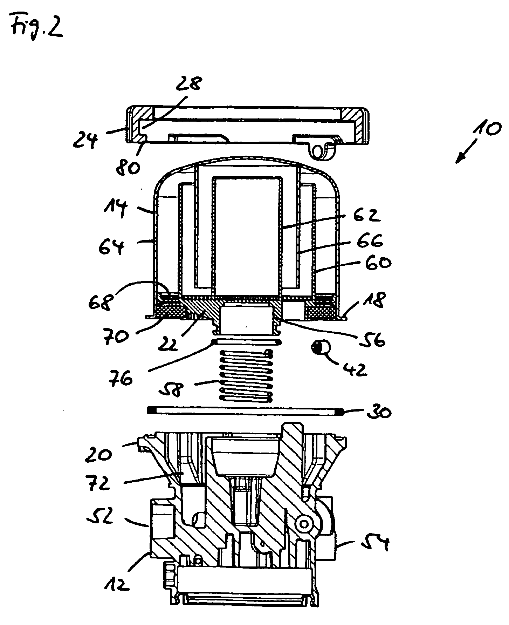

Figur 1 zeigt eine erste Ausführungsform einer erfindungsgemäßen Druckluftversorgungseinrichtung in geschnittener Darstellung. Figur 2 zeigt eine erste Ausführungsform einer erfindungsgemäßen Druckluftversorgungseinrichtung in geschnittener Explosionsdarstellung. Die Druckluftversorgungseinrichtung 10 weist ein Ventilgehäuse 12 und eine Lufttrocknerpatrone 14 auf.

Das Ventilgehäuse 12 hat einen Eingang 52, an dem ein Kompressor anschließbar ist und über den aufzubereitende Druckluft einströmen kann. Weiterhin ist ein Ausgang 54 zur Weiterleitung der aufbereiteten Druckluft vorgesehen.

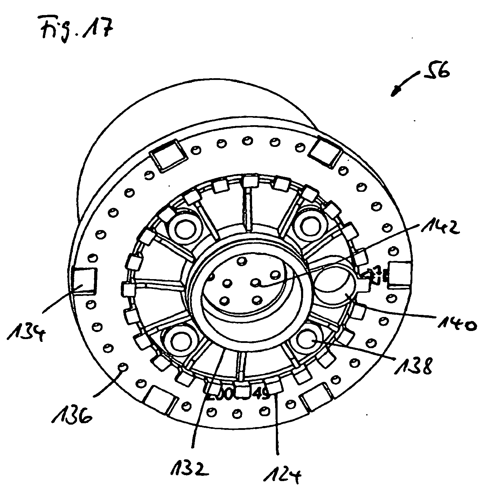

In der Lufttrocknerpatrone 14 ist eine vorzugsweise aus Kunststoff bestehende Trockenmittelbox 56 angeordnet, die in das Ventilgehäuse 12 hineinragt und an diesem über eine Feder 58 abgestützt ist. Die Trokkenmittelbox 56 umfasst eine Basis 22, ein äußeres Rohrstück 60 und ein inneres Rohrstück 62, die sich in die Lufttrocknerpatrone 14 hinein erstrecken. Zwischen den Rohrstücken 60, 62 ist ein am Gehäuse 64 der Lufttrocknerpatrone 14 befestigtes, vorzugsweise aus Metall bestehendes weiteres Rohrstück 66 angeordnet, welches in Richtung des Ventilgehäuses 12 offen ist, während die Rohrtücke 60,62 der Trockenmittelbox 56 in die entgegensetzte Richtung geöffnet sind. Die Verbindung des Rohrstückes 66 mit dem Gehäuse 64 kann nützlicherweise durch Punktschweißen erfolgen, wobei eine zusätzliche Abdichtung vorgesehen ist, beispielsweise durch aushärtendes Material. Durch die so ineinander angeordneten Rohrstücke 60, 62, 66 sowie das Gehäuse 64 wird ein Labyrinth gebildet, das vollständig mit Granulat zum Trocknen der das Labyrinth durchströmenden Druckluft gefüllt ist. Die dichte Packung des Trockenmittels in der Lufttrocknerpatrone 14 wird durch die von der Feder 58 vermittelte Kraft aufgebracht, welche die Trokkenmittelbox 56 in die Lufttrocknerpatrone 14 hineintreibt. Dervon Trockenmittel erfüllte Raum ist in Richtung des Ventilgehäuses 12 zumindestteilweise durch Filtervlies 68 begrenzt, wobei die einzelnen durch die Rohrstücke 60, 62, 66 abgegrenzten Bereiche des Filtervlieses 68 aus identischen oder verschiedenen Materialien bestehen können. Insbesondere der äußere Bereich des Filtervlieses 68 zwischen dem Rohrstück 60 und dem Gehäuse 64 der Lufttrocknerpatrone 14 und der zentrale Bereich des Filtervlieses 68 innerhalb des inneren Rohrstückes 62 sind als Staubfilter ausgelegt, während der zwischen dem äußeren Rohrstück 60 und dem inneren Rohrstück 62 angeordnete Vliesbereich für die Aufnahme und bedarfsweise Abgabe von Fremdstoffen ausgelegt ist, die über Rückschlagventile (siehe Figur 17) aus der Trockenmittelbox 56 austreten können. Im Bereich der unteren Begrenzung der Lufttrocknerpatrone 14 ist weiterhin ein Vorfilter 70 angeordnet, der optional die Eigenschaften eines Koaleszenzfilters aufweisen kann. Der Vorfilter 70 dient insbesondere der Reinigung der Druckluft im Hinblick auf Kompressoröl und vergleichbare Verschmutzungen.

In das Ventilgehäuse 12 über den Eingang 52 einströmende Druckluft wird über Kanäle im Ventilgehäuse 12 verteilt, um dann über den Kanal 72 den Vorfilter 70 anzuströmen und durch diesen hindurch zu treten. Im Anschluss daran strömt die Druckluft durch den Kanal 74 und nachfolgend durch den Filtervlies 68 in das dichtgepackte Trockenmittel ein. Die Luft strömt in der Lufttrocknerpatrone bis über das offene Ende des äußeren Rohrstückes 60 derTrockenmittelbox 56 hinaus, und sie wird dann umgelenkt, um zwischen dem äußeren Rohrstück 60 und dem am Gehäuse 64 des Lufttrockners befestigten Rohrstück 66 wieder in Richtung Ventilgehäuse 12 zu strömen. Nachdem die Druckluft das offene Ende des Rohrstückes 60 passiert hat, wird diese wiederum umgelenkt, um nachfolgend zwischen dem am Gehäuse 64 der Lufttrocknerpatrone 14 befestigten Rohrstück 66 und dem inneren Rohrstück 62 sowie über das Ende dieses Rohrstückes 62 hinaus zu strömen. Dort wird die Luft wiederum umgelenkt, um dann zentral durch das innere Rohrstück 62 und den Filtervlies 68 aus der Lufttrocknerpatrone 14 und derTrockenmittelbox 56 wieder in das Ventilgehäuse 12 einzuströmen. Die Luft wird in dem Ventilgehäuse 12 über Kanäle gesammelt und ist dann über den Ausgang 54 entnehmbar.

Um die so geschilderte Luftführung zu ermöglichen, ist eine Abdichtung der Trockenmittelbox 56 gegen das Ventilgehäuse 12 mittels einer Dichtung 76 erforderlich, die hier als radial wirkende Dichtung, insbesondere als O-Ring ausgebildet ist. Weiterhin ist eine axial wirkende Dichtung 30 vorgesehen, die einen Kragen 18 des Gehäuses 64 der Lufttrocknerpatrone 14 gegen das Ventilgehäuse 12 abdichtet. Um die für die Abdichtung erforderliche Kompression der Dichtung 30 zur Verfügung zu stellen, ist ein Bajonettverschluss 16 vorgesehen, der das Ventilgehäuse 12 und die Lufttrocknerpatrone 14 zusammenhält. Der Bajonettverschluss 16 umfasst einen Außenbajonettring 26 mit inneren abschnittsweise gebildeten Ausnehmungen 28, die durch Vorsprünge 80 und einen in Umfangsrichtung durchgehenden Kragen 78 gebildet sind. Diese inneren Ausnehmungen 28 sind geeignet, Kragenabschnitte 20 des Ventilgenäuses 12 aufzunehmen und mit diesen über jeweils abgeschrägte Flächen durch Verdrehen des Außenbajonettrings 24 gegen das Ventilgehäuse 12 eine axiale Kraft aufzubringen, welche den Kragen 18 der Lufttrocknerpatrone 14 über die Dichtung 30 gegen das Ventilgehäuse 12 presst. Der in Umfangsrichtung durchgehende Kragen 78 des Außenbajonettrings 24 wirkt somit mit dem in Umfangrichtung durchgehenden Kragen 18 der Lufttrocknerpatrone 14zusammen, während die Kragenabschnitte 20 des Ventilgehäuses mit den Vorsprüngen 80 des Außenbajonettrings 24 über deren geneigte Flächen zusammenwirken und somit bei relativer Drehung die Charakteristik eines Bajonettverschlusses zu Verfügung stellen. In der Explosionsdarstellung gemäß Figur 2 ist weiterhin ein Sicherungselement zu erkennen, das mit Bezug auf die nachfolgende Figur näher erläutert wird.

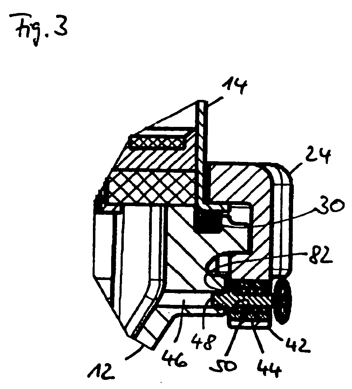

Figur 3 zeigt eine Schnittansicht eines Teils einer erfindungsgemäßen Druckluftversorgungseinrichtung mit einem Sicherungselement. Das Sicherungselement 42 sitzt in einer Öffnung 44 des Außenbajonettrings 24 und ist mit diesem dort fest verbunden. In dem in Figur 3 dargestellten Zustand dringt eine Nase 48 des Sicherungselementes 42 in eine Öffnung 46 des Ventilgehäuses ein, die mit den Druckluftführungen im Ventilgehäuse 12 in Verbindung steht. Die Nase 48 des Sicherungselements 42 trägt eine Dichtung 82, so dass im dargestellten Zustand ein Abströmen von Druckluft verhindert wird. Soll derAußenbajonettring 24 zum Öffnen des Bajonettverschlusses 16 gegen das Ventilgehäuses 12 verdreht werden, so ist es zunächst erforderlich, das Sicherungselement 42 aus der Öffnung 46 gegen die Kraft einer Feder 50 nach außen zu ziehen. Nach Freigabe der Öffnung 46 kann dann die Druckluft aus dem System abströmen; gleichzeitig ist die Drehbewegung des Außenbajonettrings 24 gegen das Ventilgehäuse 12 freigegeben. Beim Schließen des Bajonettverschlusses 16 wird der Außenbajonettring 24 so lange gegen das Ventilgehäuse 12 in Schließrichtung gedreht, bis die Nase 48 wieder in die Öffnung 46 einrastet und diese abdichtet. Ist das Einrasten hörbar, so liegt gleichzeitig für den Fahrer eine Bestätigung für die korrekten Montage der Druckluftversorgungseinrichtung 10 vor. Da eine Öffnung 46 zum Abströmen von Druckluft nur an einer Umfangsposition des Ventilgehäuses 12 vorhanden sein wird, ist sicherzustellen, dass der Außenbajonettring 24 nur in genau einer Position über die miteinander zu verbindenden Krägen geführt werden kann, beispielsweise durch mechanische Führungen, damit beim Schließen dann auch das Sicherungselement 42 und die Öffnung 46 aufeinander treffen.

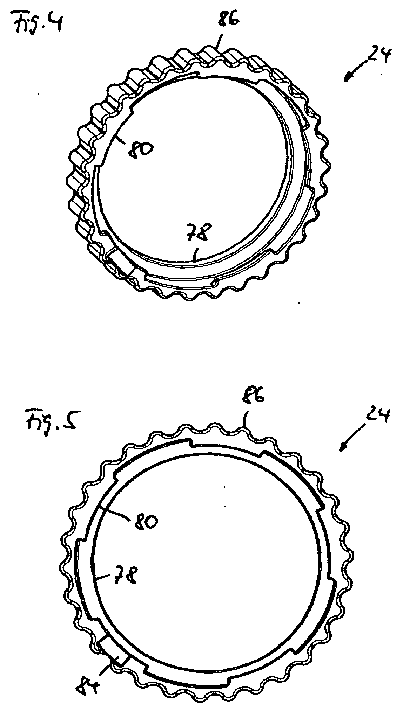

Figur 4 zeigt eine perspektivische Darstellung eines Außenbajonettrings. Figur 5 zeigt eine Draufsicht eines Außenbajonettrings. Der Außenbajonettring hat an seiner Außenseite eine gewellte Oberfläche 86, was die Handhabbarkeit beim Schließen und Öffnen verbessert. An der Innenseite des Außenbajonettrings 24 sind der vorspringende Kragen 78, der auf dem Kragen 18 der Lufttrocknerpatrone 14 zu liegen kommt, sowie die Vorsprünge 80 erkennbar, die mit den Abschnitten 20 des Ventilgehäuses zusammenwirken. Weiterhin ist der Sicherungselementhalter 84 erkennbar. In Figur 4 ist erkennbar, dass die Vorsprünge 80 von einem Endbereich zum anderen in ihrer Dicke zunehmen, wobei zusätzlich noch eine stärkere Anlaufschräge am dünneren Endbereich vorgesehen ist. Die Anlaufschräge kann beispielsweise eine Neigung von 30° haben, während die nachfolgende Fläche eine Steigung von beispielsweise 1,5° hat.

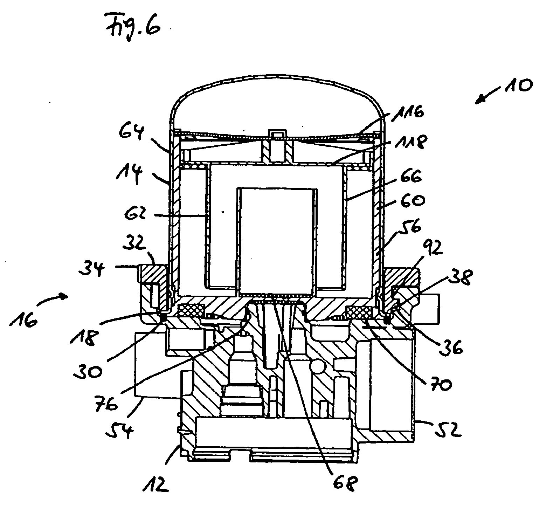

Figur 6 zeigteine zweite Ausführungsform einer erfindungsgemäßen Druckluftversorgungseinrichtung in geschnittener Darstellung. Anders als bei der bisher beschriebenen Ausführungsform enthält der die Lufttrocknerpatrone 14 mit dem ventilgehäuse 12 verbindende Bajonettverschluss 16 einen Innenbajonettring 32. Der Innenbajonettring 32 ist über die Lufttrocknerpatrone 14 geführt und über Rastnasen 90 an der Innenfläche des Innenbajonettrings 32 und entsprechende Ausnehmungen 88 am Gehäuse 64 der Lufttrocknerpatrone gegen diese verdrehgesichert. Der Innenbajonettring 32 hat einen sich nach außen erstreckenden Kragen 34 und dazu axial versetzte, sich nach außen erstreckende Vorsprünge 36. Die Vorsprünge 36 weisen Schrägen auf, die in Ausnehmungen 38 eines teilweise außerhalb des Innenbajonettrings 32 liegenden Teils des Ventilgehäuses 12 eingreifen, um mit dem die Ausnehmungen 38 einseitig begrenzenden sich radial nach innen erstreckenden Vorsprüngen 92 zusammenzuwirken. Zu diesem Zweck weisen die Vorsprünge 92 ebenfalls Schrägen auf, die eine kraftschlüssige Verbindung zwischen den Vorsprüngen 92 des Ventilgehäuses 12 und den Vorsprüngen 36 des Innenbajonettrings 32 durch eine relative Drehung von Innenbajonettring 32 und Ventilgehäuse 12 zur Verfügung stellt. Durch das Verschließen des Bajonettverschlusses 16 entsteht eine axial wirkende Kraft, die über den Kragen 18 der Lufttrocknerpatrone 14 auf eine Dichtung 30 wirkt; diese Dichtung wirkt andererseits mit dem Ventilgehäuse 12 zusammen. Eine weitere Dichtung 76 ist als Radialdichtung ausgebildet, d. h. insbesondere als O-Ring. Sie dichtet das Ventilgehäuse 12 gegen die vorzugsweise aus Kunststoff bestehende Trockenmittelbox 56 ab.

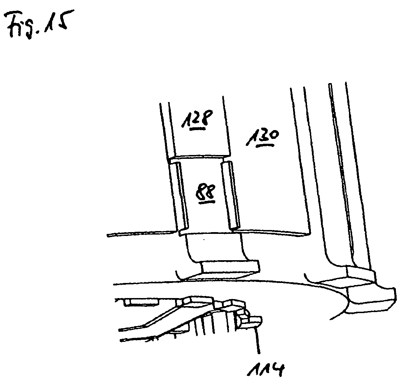

Mit dem so aufgebauten und gedichteten System ist wiederum eine effiziente und effektive Lufttrocknung möglich, indem über den Eingang 52 des Ventilgehäuses 12 Druckluft einströmt, sich über Luftkanäle im Ventilgehäuse 12 verteilt und über einen vorzugsweise als Koaleszenzfilter ausgebildeten Vorfilter 70 in die Lufttrocknerpatrone 14 bzw. die darin angeordnete Trockenmittelbox 56 strömt. Die Trockenmittelbox 56 umfasst wiederum ein äußeres nach oben offenes Rohrstück 60 und ein inneres nach oben geöffnetes Rohrstück 62 auf. Zwischen dem äußeren Rohrstück 60 und dem inneren Rohrstück 62 ist ein weiteres Rohrstück 66 angeordnet, das nach unten offen ist und vorzugsweise aus Metall besteht. Dieses metallische Rohrstück 66 wird von einer Kompressionseinrichtung 118 gehalten, die von einer Federeinrichtung 116 mit Kraft beaufschlagt wird. Durch diese Federkraft wird das in der Trockenmittelbox vorgesehene als Trockenmittel wirkende Granulat dicht gepackt. Die aus dem Vorfilter 70 ausströmende Luft strömt außerhalb des äußeren Rohrstückes 60, d. h. zwischen dem äußeren Rohrstück 60 und dem Gehäuse 64 der Lufttrocknerpatrone 14 durch nicht dargestellte axiale Kanäle, die zwischen den zu erkennenden Anlagebereichen der Trockenmittelbox 56 angeordnet sind, nach oben. Zur weiteren Veranschaulichung dieser Luftführungen wird auf Figur 15 hingewiesen. Die Luft umströmt das offene Ende des äußeren Rohrstücks 60, tritt in den trockenmittelfreien Raum oberhalb der Kompressionseinrichtung 118 ein und strömt nachfolgend zwischen dem nach unten geöffneten Rohrstück 66 und dem äußeren Rohrstück 60 nach unten, um dann wiederum seine Strömungsrichtung umzukehren und zwischen dem inneren Rohrstück 62 und dem nach unten geöffneten Rohrstück 66 nach oben zu strömen. Nach nochmaliger Strömungsumkehrströmt die zu trocknende Luft dann in das innere Rohrstück 62 ein, um dieses dann nach unten durch einen als Staubfilterwirkenden Filtervlies 68 in das Ventilgehäuse 12 zu verlassen. Getrocknete Luft wird dann über den Ausgang 54 abgeführt.

Die Trockenmittelbox 56 und der freie Bereich zwischen Trockenmittelbox 56 und Gehäuse 64 sind vollständig mit Granulat gefüllt. Dieses kann einheitlich ausgebildet sein. Besonders nützlich kann auch sein, verschiedene Arten von Trockenmittel in die Trockenmittelbox 56 einzubringen. So kann das anfänglich durchströmte Trockenmittel für eherfeuchte Luft optimiert sein, während das Trockenmittel im Ausströmbereich für die Restentfeuchtung schon vorgetrockneter Luft optimiert ist.

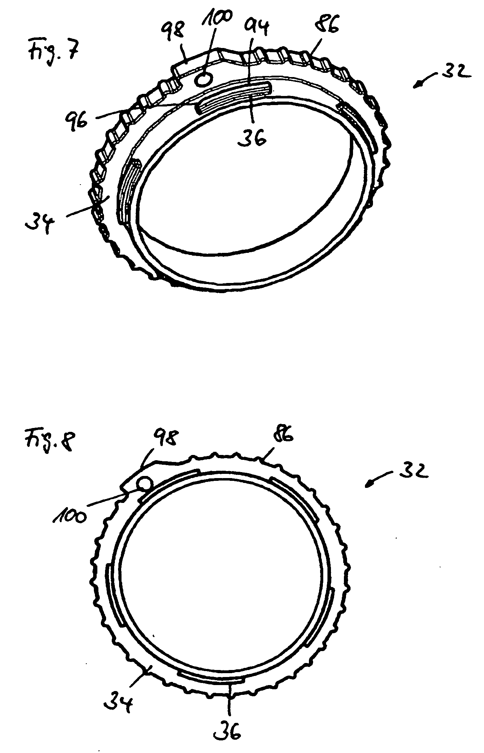

Figur 7 zeigt eine perspektivische Darstellung eines Innenbajonettrings. Figur 8 zeigt eine Draufsicht eines Innenbajonettrings. Der Innenbajonettring 32 hat eine gewellte äußere Oberfläche 86, was die Handhabbarkeit beim Verdrehen des Innenbajonettrings 32 verbessert. Die gewellte äußere Oberfläche ist am nach außen gerichteten Kragen 34 des Innenbajonettrings 32 angeordnet. Axial versetzt zum Kragen 34 sind Vorsprünge 36 vorgesehen, die ebenfalls nach außen gerichtet sind, und die für die Bajonettfunktion erforderliche Neigung der dem Kragen 34 zugewandten Oberfläche 94 aufweisen. Diese Neigung kann beispielsweise 1,5° betragen. Zur Erleichterung der anfänglichen Drehbewegung beim Verschließen des Bajonettverschlusses sind Anlaufschrägen 96 vorgesehen, die eine deutlich größere Neigung aufweisen, beispielsweise 30°. Die Vorsprünge 36 können vorteilhafterweise einen Anschlag aufweisen, um die Schließbewegung des Bajonettverschlusses zu begrenzen. An einem Ansatz 98 am Kragen 34 ist eine axiale Bohrung 100 zu erkennen, die zur Aufnahme des im Zusammenhang mit Figur 3 detailliert beschriebenen Sicherungselementes 42 aufweist. Bei der Anwendung sitzt das Sicherungselement 42 fest in dieser Bohrung 100, um mit seiner Nase dann in eine das Abströmen von Druckluft aus der Druckluftversorgungseinrichtung 10 ermöglichende Bohrung im Ventilgehäuse 12 einzurasten. Somit wird auch im Zusammenhang mit der Innenbajonettlösung die vorteilhafte Kombination aus Druckluftablasseinrichtung und Rasteinrichtung zur Verfügung gestellt.

Die im Zusammenhang mit den Figuren 1 bis 8 beschriebenen Ausführungsformen der vorliegenden Erfindung enthalten Lufttrocknerpatronen die als offene Systeme ausgelegt sind. Dies bedeutet, dass die Lufttrocknerpatrone direkt am Ventilgehäuse über eine Dichtung abdichtet, das heißt insbesondere ohne zwischengelagerten Flansch.

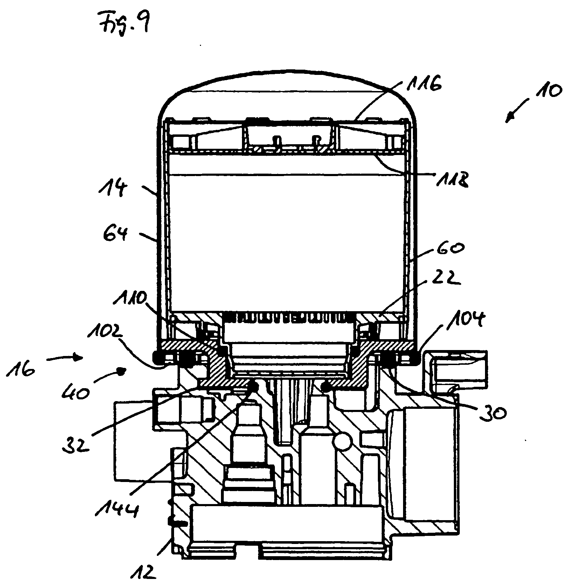

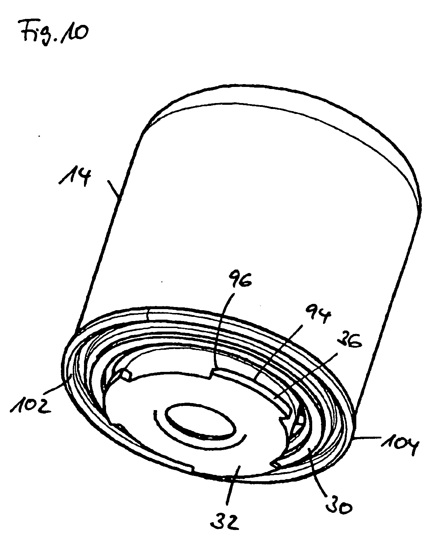

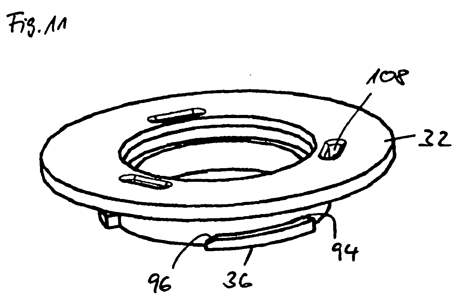

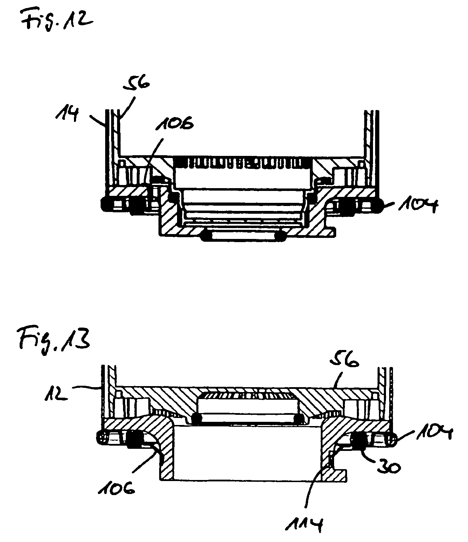

Figur 9 zeigt eine dritte Ausführungsform einer erfindungsgemäßen Druckluftversorgungseinrichtung in geschnittener Darstellung. Figur 10 zeigt eine perspektivische Darstellung einer Lufttrocknerpatrone mit Fußflansch und Innenbajonettring. Figur 11 zeigt eine perspektivische Darstellung eines Innenbajonettrings mit Fußflanschfunktion. Figur 12 zeigt eine Schnittansicht eines Teils einer erfindungsgemäßen Druckluftversorgungseinrichtung zur Erläuterung einer ersten Montageart eines Fußflansches und Figur 13 zeigt eine Schnittansicht eines Teils einer erfindungsgemäßen Druckluftversorgungseinrichtung zur Erläuterung einer zweiten Montageart eines Fußflansches. Das in diesen Figuren dargestellte System enthält eine geschlossene Lufttrocknerpatrone 14. Von geschlossenen Lufttrocknerpatronen 14 ist die Rede, wenn deren Gehäuse 64 nicht direkt am Ventilgehäuse 12 abdichtet, sondern ein Fußflansch 40 vorgesehen ist. Der Fußflansch 40 ist mit einem Innenbajonettring 32 kombiniert, der im Hinblick auf seine die Bajonettwirkung zur Verfügung stellende Ausgestaltung mit dem im Zusammenhang mit den Figuren 6 bis 8 beschriebenen Innenbajonettring vergleichbar. Ebenso weist das Ventilgehäuse 12 bezogen auf den Bajonettverschluss 16 eine vergleichbare Ausgestaltung auf, wie das im Zusammenhang mit Figur 6 beschriebene Ventilgehäuse 12. Der Innenbajonettring 32 ist über einen Deckel 102 mit dem Gehäuse 64 der Lufttrocknerpatrone 14 verbunden. Die Verbindung des Dekkels 102 mit dem Gehäuse 64 der Lufttrocknerpatrone erfolgt über einen Bördelrand 104. Der Fußflansch 40 wirkt über eine Dichtung 30, die an dem Deckel 102 anliegt, mit dem Ventilgehäuse 12 zusammen, wobei die abdichtende Kraft in axiale Richtung wirkt. Eine weitere radial wirkende Dichtung 144 ist zwischen dem Ventilgehäuse 12 und dem Innenbajonettring 32 vorgesehen. Ebenfalls ist eine Radialdichtung 110 zwischen derTrokkenmittelbox 56 und dem Innenbajonettring 32 angeordnet. Das so aufgebaute und abgedichtete System ermöglicht ein Einströmen von Druckluft in den Eingang 52, eine Überleitung der Druckluft in den Bereich zwischen der Trockenmittelbox 56 und dem Gehäuse 64 der Lufttrocknerpatrone 14, eine Umlenkung der Luft in den zentralen mit Trockenmittel gefüllten Bereich 112 der Trokkenmittelbox 56 und ein nachfolgendes Abströmen der getrockneten Luft aus der Lufttrocknerpatrone 14 in das Ventilgehäuse 12, aus dem die getrocknete Luft dann über den Ausgang 54 entnommen werden kann. Die Kompression des in der Trockenmittelbox 56 vorhandenen Trockenmittels erfolgt über eine eine Kompressionseinrichtung 118 beaufschlagende Federeinrichtung.

Gemäß den Figuren 11 und 12 erfolgt die Verbindung des Deckels 102 mit dem Innenbajonettring 32 durch das Eingreifen von Laschen 106 in dafür im Innenbajonettring 32 vorgesehene Öffnungen 108 zur Verfügung gestellt.

Im Hinblick auf die Befestigung des Deckels 102 am Innenbajonettring 32 zeigt Figur 13 eine Variante. Hier greifen Laschen 106 nicht in Öffnungen 108 des Innenbajonettrings 32 ein. Vielmehrliegen diese in Nuten 114 des Innenbajonettrings 32. Diese Nuten 114 sind am Umfang des Innenbajonettringes so angeordnet, dass sie nicht mit den für die Bajonettfunktion erforderlichen Vorsprüngen interferieren.

Die Trockenmittelbox 56 gemäß Figur 9 hat einen grundsätzlich anderen Aufbau als die im Zusammenhang mit den Figuren 1, 2 und 6 beschriebenen-Trokkenmittelboxen 56. Während letztere ein viergängiges Labyrinth bilden, hat die Trockenmittelbox 56 gemäß Figur 9 keinen solchen labyrinthartigen Aufbau. Es ist zu bemerken, dass das geschlossene System gemäß Figur 9 ohne weiteres ebenfalls mit einer Trockenmittelbox 56 mit labyrinthartigen Aufbau, wie dieser in den Figuren 1, 2 und 6 gezeigt ist, kombinierbar ist. Gleiches gilt umgekehrt, denn für die offenen System gemäß den Figuren 1, 2 und 6 ist die Verwendung labyrinthartiger Trockenmittelboxen nicht zwingend.

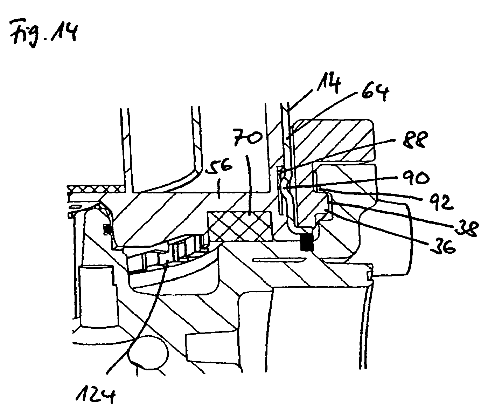

Figur 14 zeigt einen Teil einer erfindungsgemäßen Druckluftversorgungseinrichtung in geschnittener Darstellung. In dieser Darstellung ist die Verbindung zwischen dem Gehäuse 64 der Lufttrocknerpatrone 14 und der Trockenmittelbox 56 deutlich zu erkennen. Eine Rastnase 90 ist in einer Ausnehmung 88 angeordnet. Weiterhin sind Halter 124 zum Halten des vorfilters 70 gezeigt.

Figur 15 zeigt einen Teil einerTrockenmittelbox 56 in perspektivischer Darstellung. Hiersind die Ausnehmungen 88 sowie die Halter 124 ebenfalls zu erkennen. Weiterhin erkennt man Bereiche 128, die gegenüber benachbarten Bereichen 130 einen vergrößerten Durchmesser aufweisen. Die Bereiche 128 liegen bei in das Gehäuse 64 der Lufttrocknerpatrone 14 eingesetzter Trockenmittelbox 56 an dem Gehäuse 64 an. Die Bereiche 130 dienen dann als Kanäle, um die Druckluft beim Einströmen in die Lufttrocknerpatrone 14 nach oben zu leiten.

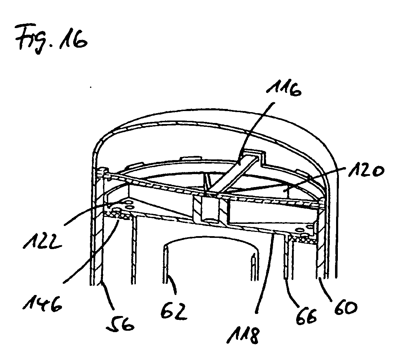

In Figur 16 zeigt eine perspektivische geschnittene Darstellung eines Teils einer erfindungsgemäßen Lufttrocknerpatrone. Eine Federeinrichtung 116 ist an der Trockenmittelbox 56 befestigt, wobei die Verbindung vorzugsweise spritztechnisch realisiert ist. Die Federeinrichtung 116 besteht aus zwei sich kreuzenden federnden Elementen, die in der Mitte der Anordnung miteinanderverbunden sind. Dort beaufschlagen sie eine Kompressionseinrichtung 118 nach unten mit Kraft, um diese so in die Trockenmittelbox 56 hinein zu treiben. Alternativ könnte eine beispielsweise zentral angeordnete Spiralfeder vorgesehen sein, die sich am Gehäuse 64 der Lufttrocknerpatrone 14 abstützt. Die Kompressionseinrichtung 118 ist durch eine Mehrzahl von Stegen 120 stabilisiert, und sie weist Durchgangslöcher 122 auf, die einen Übertritt der oberhalb der Kompressionseinrichtung 118 anwesenden Luft in den Kanal zwischen dem äußeren Rohrstück 60, welches Bestandteil derTrockenmittelbox 56 ist, und dem Rohrstück 66 zu erlauben, das mit der Kompressionseinrichtung 118 in Verbindung steht. In diesem Kanal ist eingangsseitig ein Filter 146 angeordnet, das von der Luft bei ihrem Eintritt in den Kanal durchströmt wird.

Figur 17 zeigt eine Trockenmittelbox 56 in perspektivischer Darstellung. Diese Trockenmittelbox 56 kann beispielsweise bei den im Zusammenhang mit der anhand der Figuren 1 und 2 beschriebenen Ausführungsform der erfindungsgemäßen Druckluftversorgungseinrichtung 10 zum Einsatz kommen. In der zentralen Öffnung 132 der Trockenmittelbox 56 kann die in Figur 1 dargestellte Feder 58 eindringen, um die Trockenmittelbox 56 in Richtung der Lufttrocknerpatrone 14 mit Kraft zu beaufschlagen. Am Umfang der Trockenmittelbox 56 sind mehrere Federlaschen 134 angeordnet, die sich in das Gehäuse 64 der Lufttrocknerpatrone 14 einkrallen, und so ebenfalls eine axial nach oben gerichtete Kraft auf die Trockenmittelbox 56 ausüben. Bei geeigneter Auslegung der Federlaschen 134 kann auf die in die Öffnung 132 eindringende Feder 58 unter Umständen verzichtet werden, was den Zusammenbau der Druckluftversorgungseinrichtung 10 erleichtert. Im Bereich des Umfangs der Trockenmittelbox 56 ist eine Vielzahl von Öffnungen 136 vorgesehen, über die die Druckluft in das Trockenmittel einströmt. Innerhalb der Öffnung 132 ist eine Mehrzahl von Öffnungen 142 erkennbar, durch die Druckluft aus derTrockenmittelbox 56 ausströmen kann. Es sind weiterhin Halter 124 zum Halten des Vorfilters 70 zu erkennen. Weiter innen sind Rückschlagventile 138 angeordnet, über die die Trockenmittelbox gespült werden kann. Die Rückschlagventile liegen direkt unterhalb von dem mit Trockenmittel gefüllten Bereich, wobei vorzugsweise ein Filtervlies 68 die Rückschlagventile 138 gegen das Trockenmittel abschirmt. Die Trockenmittelbox 56 weist weiterhin eine Öffnung 140 auf. In diese Öffnung 140 dringt beim Aufsetzen der Lufttrocknerpatrone 14 auf das Ventilgehäuse 12 ein mit dem Ventilgehäuse in Verbindung stehender Zapfen ein. Dieser Zapfen dient zur Vorzentrierung der Lufttrocknerpatrone 14 relativ zum Ventilgehäuse 12 und zur Verdrehsicherung der Komponeten gegeneinander. Der Zapfen am Ventilgehäuse hat vorzugsweise eine solche Länge, dass dieser bei der Montage der Lufttrocknerpatrone 14 den ersten Kontakt zwischen dem Ventilgehäuse 12 und der Lufttrocknerpatrone 14 zur Verfügung stellt.

### Bezugszeichenliste:

- 10: Druckluftversorgungseinrichtung
- 12: Ventilgehäuse
- 14: Lufttrocknerpatrone
- 16: Bajonettverschluss
- 18: Kragen
- 20: Kragenabschnitt
- 22: Basis
- 24: Außenbajonettring
- 28: Ausnehmung
- 30: Dichtung
- 32: Innenbajonettring
- 34: Kragen
- 36: Vorsprung
- 38: Ausnehmung
- 40: Fußflansch
- 42: Sicherungselement
- 44: Öffnung
- 46: Öffnung
- 48: Nase
- 50: Feder
- 52: Eingang
- 54: Ausgang
- 56: Trockenmittelbox
- 58: Feder
- 60: äußeres Rohrstück
- 62: inneres Rohrstück
- 64: Gehäuse
- 66: Rohrstück
- 68: Filtervlies
- 70: Vorfilter
- 72: Kanal
- 74: Kanal
- 76: Dichtung
- 78: Kragen
- 80: Vorsprung
- 82: Dichtung
- 84: Sicherungselementhalter
- 86: gewellte Oberfläche
- 88: Ausnehmung
- 90: Rastnase
- 92: Vorsprung
- 94: Oberfläche
- 96: Anlaufschräge
- 98: Ansatz
- 100: Bohrung
- 102: Deckel
- 104: Bördelrand
- 106: Lasche
- 108: Öffnung
- 110: Radialdichtung
- 112: Trockenmittelbereich
- 114: Nut
- 116: Federeinrichtung
- 118: Kompressionseinrichtung
- 120: Steg
- 122: Durchgangsloch
- 124: Halter
- 128: Bereich
- 130: Bereich
- 132: Öffnung
- 134: Federlasche
- 136: Öffnung
- 138: Rückschlagventil
- 140: Öffnung
- 142: Öffnung
- 144: Dichtung
- 146: Filter

## Patentansprüche

1. Druckluftversorgungseinrichtung (10) für ein Nutzfahrzeug, mit einem Ventilgehäuse (12) und einer lösbar mit dem Ventilgehäuse verbundenen Lufttrocknerpatrone (14), wobei das Ventilgehäuse (12) und die Lufttrocknerpatrone (14) über einen Bajonettverschluss (16) miteinander verbunden sind, **dadurch gekennzeichnet, dass** die Lufttrocknerpatrone (14) und das Ventilgehäuse (12) zumindest abschnittsweise jeweils einen sich im Wesentlichen radial nach außen erstreckenden Kragen (18, 20) aufweisen, wobei durch mindestens einen dieser Krägen Abschnitte (20) gebildet sind, die eine in Schließrichtung des Bajonettverschlusses zunehmende axiale Kragendicke aufweisen, und dass ein über die Krägen geführter, von der Lufttrocknerpatrone und dem Ventilgehäuse lösbarer Außenbajonettring (24) vorgesehen ist, der einen sich in radiale Richtung nach innen erstreckenden Kragen (78) und in axiale Richtung dazu versetzte nach innen gerichtete Vorsprünge (80) aufweist, wobei die axiale Breite der Vorsprünge (80) der variablen axialen Kragendicke in der Weise angepasst ist, dass der Bajonettverschluss (16) durch relative Drehung von Außenbajonettring und Ventilgehäuse beziehungsweise Lufttrocknerpatrone schließbar beziehungsweise lösbar ist.

2. Druckluftversorgungseinrichtung nach Anspruch 1, **dadurch gekennzeichnet, dass** der Kragen (20) des Ventilgehäuses (12) mehrere sich in Umfangsrichtung erstreckende Kragenabschnitte (20) mit in Schließrichtung des Bajonettverschlusses (16) zunehmender axialer Kragendicke und mit dazwischen vorgesehenen Ausnehmungen (28) aufweist und dass sich der Kragen (18) der Lufttrocknerpatrone (14) über den gesamten Umfang im Wesentlichen gleichförmig erstreckt und bei geschlossenem Bajonettverschluss über eine Dichtung (30) mit dem Ventilgehäuse zusammenwirkt.

3. Druckluftversorgungseinrichtung nach Anspruch 2, **dadurch gekennzeichnet, dass** die Kragenabschnitte (20) zumindest teilweise einen Anschlag zur Begrenzung der Schließdrehung des Bajonettverschlusses aufweisen.

4. Druckluftversorgungseinrichtung nach den Ansprüchen 1 bis 3, **dadurch gekennzeichnet, dass** der Außenbajonettring (24) gegen die Lufttrocknerpatrone (14) verdrehgesichert ist.

5. Druckluftversorgungseinrichtung (10) für ein Nutzfahrzeug, mit einem Ventilgehäuse (12) und einer lösbar mit dem Ventilgehäuse verbundenen Lufttrocknerpatrone (14), wobei das Ventilgehäuse (12) und die Lufttrocknerpatrone (14) über einen Bajonettverschluss (16) miteinander verbunden sind, **dadurch gekennzeichnet, dass** die Lufttrocknerpatrone (14) einen sich im Wesentlichen radial nach außen erstreckenden Kragen (18) aufweist, der durch einen die Lufttrocknerpatrone umgebenden Innenbajonettring (32) im geschlossenen Zustand des Bajonettverschlusses (16) in axiale Richtung mit Kraft beaufschlagbar ist, dass der Innenbajonettring einen sich in radiale Richtung nach außen erstreckenden Kragen (34) und in axiale Richtung dazu versetzte nach außen gerichtete Vorsprünge (36) aufweist, die in Schließrichtung des Bajonettverschlusses zunehmende axiale Vorsprungdicke aufweisen, und dass ein zumindest teilweise radial außerhalb des Innenbajonettrings liegender Teil des Ventilgehäuses sich radial nach außen erstreckende Ausnehmungen (38) aufweist, deren axiale Dicken in der Weise den Vorsprüngen des Ventilgehäuses angepasst sind, dass der Bajonettverschluss durch relative Drehung von Innenbajonettring und Ventilgehäuse (12) schließbar beziehungsweise lösbar ist und dass der Innenbajonettring (32) von der Lufttrocknerpatrone lösbar ist.

6. Druckluftversorgungseinrichtung nach Anspruch 5, **dadurch gekennzeichnet, dass** die Vorsprünge (36) des Innenbajonettrings zumindest teilweise einen Anschlag zur Begrenzung der Schließdrehung des Bajonettverschlusses (16) aufweisen.

7. Druckluftversorgungseinrichtung nach Anspruch 5 oder 6, **dadurch gekennzeichnet, dass** der Innenbajonettring (32) gegen die Lufttrocknerpatrone (14) verdrehgesichert ist.

8. Druckluftversorgungseinrichtung nach einem der Ansprüche 5 bis 7, **dadurch gekennzeichnet, dass** die Lufttrocknerpatrone (14) bei geschlossenem Bajonettverschluss über eine Dichtung mit dem Ventilgehäuse zusammenwirkt.

9. Druckluftversorgungseinrichtung nach einem der vorangehenden Ansprüche, **dadurch gekennzeichnet, dass** der Bajonettverschluss (16) einen Bajonettring (24, 32) aufweist, der eine ein Sicherungselement (42) aufnehmende Öffnung (44) hat, wobei das Sicherungselement im geschlossenen Zustand des Bajonettverschlusses in eine Öffnung (46) des Ventilgehäuses (12) einrastet, über die die Druckluftversorgungseinrichtung (10) durch Betätigen des Sicherungselementes entlüftet werden kann.

10. Druckluftversorgungseinrichtung nach Anspruch 9, **dadurch gekennzeichnet, dass** das Sicherungselement (42) eine Nase (48) aufweist, die durch die Kraft einer Feder (50) in die Öffnung (46) des Ventilgehäuses (12) gedrückt wird, wobei die Nase zum Entlüften der Druckluftversorgungseinrichtung (10) und zur Freigabe der Öffnungsbewegung des Bajonettverschlusses (16) gegen die Federkraft bewegbar ist.

11. Druckluftversorgungseinrichtung nach einem der Ansprüche 1 bis 3, 5 oder 6, **dadurch gekennzeichnet, dass** das Ventilgehäuse (12) einen in Richtung der Lufttrocknerpatrone (14) vorstehenden exzentrischen Zapfen aufweist, der in eine Öffnung (140) einer in einem Gehäuse (64) der Lufttrocknerpatrone (14) angeordneten Trockenmittelbox (56) eindringt, wobei die Länge des Zapfens so bemessen ist, dass über ihn der erste Kontakt zwischen Lufttrocknerpatrone (14) und Ventilgehäuse beim Zusammenbau erfolgt.

## Claims

1. A compressed air supply device (10) for a utility vehicle, comprising a valve housing (12) and an air dryer cartridge (14) which is releasably connected to said valve housing, wherein said valve housing (12) and said air dryer cartridge (14) are connected to one another by means of a bayonet connector (16), **characterised in that** said air dryer cartridge (14) and said valve housing (12) are provided each, at least in sections, with a respective substantially outwardly extending collar (18, 20), with at least one of these collars forming sections (20) having an axial collar thickness that increases in the closing direction of said bayonet connector, and **in that** an outer bayonet ring (24) is provided which is guided by means of said collars and which is detachable from said air dryer cartridge and said valve housing, which outer bayonet ring comprises a radially inwardly extending collar (78) and inwardly oriented projections (80) offset with respect to said collar along an axial direction, with the axial width of said projections (80) being adapted to the variable axial collar thickness in such a way that said bayonet connector (16) can be closed or detached, respectively, by a relative rotation of said outer bayonet ring and said valve housing.

2. The compressed air supply device as claimed in claim 1, **characterised in that** said collar (20) of said valve housing (12) is provided with a plurality of collar sections (20) extending along the peripheral direction and having an axial collar thickness increasing in the closing direction of said bayonet connector (16) and having recesses (28) which are provided therebetween, and **in that** said collar (18) of said air dryer cartridge (14) extends substantially uniformly over the entire periphery and interacts via a seal (30) with said valve housing when said bayonet connector is closed.

3. The compressed air supply device as claimed in claim 2, **characterised in that** said collar sections (20) comprise, at least partially, a stop for limiting the closing rotation of said bayonet connector.

4. The compressed air supply device as claimed in claims 1 to 3, **characterised in that** said outer bayonet ring (24) is secured against rotation relative to said air dryer cartridge (14).

5. The compressed air supply device (10) for a utility vehicle, comprising a valve housing (12) and an air dryer cartridge (14) which is releasably connected to said valve housing, wherein said valve housing (12) and said air dryer cartridge (14) are connected to one another by means of a bayonet connector (16), **characterised in that** said air dryer cartridge (14) is provided with a substantially outwardly extending collar (18) which an inner bayonet ring (32) surrounding said air dryer cartridge may act upon with a force in an axial direction when said bayonet connector (16) is closed, that said inner bayonet ring comprises a radially outwardly extending collar (34) and outwardly oriented projections (36) offset with respect to said collar along an axial direction, which projections present an axial projection thickness increasing along the closing direction of said bayonet connector, and **in that** a part of said valve housing which is located at least partly outside of said inner bayonet ring in a radial direction, comprises radially outwardly extending recesses (38) whose axial thicknesses are adapted to said projections of said valve housing in such a way that said bayonet connector can be closed or detached, respectively, by a relative rotation of said inner bayonet ring and said valve housing (12) and that said inner bayonet ring (32) is detachable from said air dryer cartridge.

6. The compressed air supply device as claimed in claim 5, **characterised in that** said projections (36) of said inner bayonet ring comprise, at least partly, a stop for limiting the closing rotation of said bayonet connector (16).

7. The compressed air supply device as claimed in claim 5 or 6, **characterised in that** said inner bayonet ring (32) is secured against rotation relative to said air dryer cartridge (14).

8. The compressed air supply device as claimed in any of the claims 5 to 7, **characterised in that** said air dryer cartridge (14) interacts via a seal with said valve housing when said bayonet connector is closed.

9. The compressed air supply device as claimed in any of the preceding claims, **characterised in that** said bayonet connector (16) has a bayonet ring (24, 32) which is provided with an opening (44) receiving a securing element (42), with said securing element engaging in an opening (46) of said valve housing (12) when said bayonet connector is in its closed state, via which opening the compressed air supply device (10) can be ventilated by actuation of said securing element.

10. The compressed air supply device as claimed in claim 9, **characterised in that** said securing element (42) comprises a lug (48) which is pressed by the force of a spring (50) into said opening (46) of said valve housing (12), with said lug being movable against the spring force for ventilation of the compressed air supply device (10) and for enabling the opening movement of said bayonet connector (16).

11. The compressed air supply device as claimed in any of the claims 1 to 3, 5 or 6, **characterised in that** said valve housing (12) comprises an eccentric pin which projects in the direction of said air dryer cartridge (14) and which penetrates into an opening (140) of a desiccant box (56) disposed in a housing (64) of said air dryer cartridge (14), with the length of said pin being dimensioned such that, during assembly, the first contact between said air dryer cartridge (14) and said valve housing takes place via said pin.

## Revendications

1. Dispositif (10) d'alimentation en air comprimé pour un véhicule utilitaire, comprenant un corps (12) de vanne et une cartouche (14) de sécheur d'air assemblée de manière amovible au corps de vanne, le corps (12) de vanne et la cartouche (14) de sécheur d'air étant assemblés entre eux par une fermeture (16) à baïonnette, **caractérisé en ce que** la cartouche (14) de sécheur d'air et le corps (12) de vanne ont, au moins par endroit, respectivement un collet (18, 20) s'étendant sensiblement radialement vers l'extérieur, dans lequel il est formé, par au moins un de ces collets, des segments (20), qui ont une épaisseur axiale de collet croissant dans la direction de fermeture de la fermeture à baïonnette et **en ce qu'**il est prévu un anneau (24) extérieur de baïonnette, qui est guidé par les collets, qui peut être détaché de la cartouche de sécheur d'air et du corps de vanne et qui a un collet (78) s'étendant vers l'intérieur dans la direction radiale et des saillies (80) dirigées dans la direction axiale vers l'intérieur en y étant décalées, la largeur axiale des saillies (80) de l'épaisseur de collet axiale variable étant adaptée de manière à ce que la fermeture (16) à baïonnette puisse être fermée ou ouverte par une rotation relative de l'anneau extérieur de baïonnette et du corps de vanne ou de la cartouche de sécheur d'air.

2. Dispositif d'alimentation en air comprimé suivant la revendication 1, **caractérisé en ce que** le collet (20) du corps (12) de vanne a plusieurs segments (20) de collet s'étendant dans la direction en périphérie, ayant une épaisseur de collet axiale croissant dans la direction de fermeture de la fermeture (16) à baïonnette, et ayant des évidements (28) prévus entre eux et **en ce que** le collet (18) de la cartouche (14) de sécheur d'air s'étend sensiblement uniformément sur tout le pourtour et, lorsque la fermeture à baïonnette est fermée, coopère avec le corps de vanne par une étanchéité (30).

3. Dispositif d'alimentation en air comprimé suivant la revendication 2, **caractérisé en ce que** les segments (20) de collet ont, au moins en partie, une butée de limitation de la rotation de fermeture de la fermeture à baïonnette.

4. Dispositif d'alimentation en air comprimé suivant les revendications 1 à 3, **caractérisé en ce que** l'anneau (24) extérieur de baïonnette est empêché de tourner par rapport à la cartouche (14) de sécheur d'air.

5. Dispositif d'alimentation en air comprimé suivant l'une des revendications précédentes, **caractérisé en ce que** la cartouche (14) de sécheur d'air a un collet (18) s'étendant sensiblement radialement vers l'extérieur, qui peut être soumis à une force dans une direction axiale à l'état fermé de la fermeture (16) à baïonnette par un anneau (32) intérieur de baïonnette entourant la cartouche de sécheur d'air, **en ce que** l'anneau intérieur de baïonnette a un collet (34) s'étendant vers l'extérieur dans la direction radiale et des saillies (36) dirigées vers l'extérieur et décalées par rapport à lui dans la direction axiale, saillies qui ont des épaisseurs axiales croissant dans la direction de fermeture de la fermeture à baïonnette et **en ce qu'**au moins une partie du corps de vanne se trouvant, au moins en partie, radialement à l'extérieur de l'anneau intérieur de baïonnette a des évidements (18) s'étendant radialement vers l'extérieur, dont des épaisseurs axiales sont adaptées aux saillies du corps de vanne, de manière à ce que la fermeture à baïonnette puisse être fermée ou ouverte par une rotation relative de l'anneau intérieur de baïonnette et du corps (12) de vanne.

6. Dispositif d'alimentation en air comprimé suivant la revendication 5, **caractérisé en ce que** les saillies (36) de l'anneau intérieur de baïonnette ont, au moins en partie, une butée de limitation de la rotation de fermeture de la fermeture (16) de baïonnette.

7. Dispositif d'alimentation en air comprimé suivant la revendication 5 ou 6, **caractérisé en ce que** l'anneau (32) intérieur de baïonnette est empêché de tourner par rapport à la cartouche (14) de sécheur d'air.

8. Dispositif d'alimentation en air comprimé suivant l'une des revendications 5 à 7, **caractérisé en ce que** la cartouche (14) de sécheur d'air coopère, lorsque la fermeture de baïonnette est fermée, avec le corps de vanne par une étanchéité.

9. Dispositif d'alimentation en air comprimé suivant l'une des revendications précédentes, **caractérisé en ce que** la fermeture (16) à baïonnette a un anneau (24, 32) de baïonnette qui a une ouverture (44) recevant un élément (42) de sécurité, l'élément de sécurité s'encliquetant, lorsque la fermeture de baïonnette est à l'état fermé, dans une ouverture (46) du corps (12) de vanne, par laquelle le dispositif (10) d'alimentation en air comprimé peut être ventilé en actionnant l'élément de sécurité.

10. Dispositif d'alimentation en air comprimé suivant la revendication 9, **caractérisé en ce que** l'élément (42) de sécurité a un bec (48), qui est poussé par la force d'un ressort (50) dans l'ouverture (46) du corps (12) de vanne, le bec pouvant être déplacé à l'encontre de la force du ressort pour la ventilation du dispositif (10) d'alimentation en air comprimé et pour la libération du mouvement d'ouverture de la fermeture (16) à baïonnette.

11. Dispositif d'alimentation en air comprimé suivant l'une des revendications 1 à 3, 5 ou 6, **caractérisé en ce que** le corps (12) de vanne a un tourillon excentré, qui est en saillie dans la direction de la cartouche (14) de sécheur d'air et qui pénètre dans une ouverture (140) d'une boîte (56) d'agent de dessiccation disposée dans un boîtier (64) de la cartouche (14) de sécheur d'air, la longueur du tourillon étant telle que par lui s'effectue le premier contact entre la cartouche (14) de sécheur d'air et le corps de vanne lors de l'assemblage.
